# FASCICULE DE BREVET EUROPEEN

(11) **EP 0 601 910 B1**
(45) Date de publication et mention de la délivrance du brevet: **19.03.1997**
(21) Numéro de dépôt: 93402875.4
(22) Date de dépôt: 29.11.1993
(51) Int. Cl.: F02K 1/56, F02K 1/70

(54) **Ensemble d'inversion de poussée à portes équipé d'un dispositif de contrôle de jet**
Schubumkehrklappe mit Deflektoren zur Strahlbeeinflussung
Thrust reverser door with deflector vanes to guide the jet

(30) Priorité: 04.12.1992 FR 9214615
(43) Date de publication de la demande: 15.06.1994
(73) Titulaire: SOCIETE DE CONSTRUCTION DES AVIONS HUREL-DUBOIS (société anonyme), F-92360 Meudon-La-Forêt (FR)
(72) Inventeur: Standish, Robert, F-78120 Gazeran (FR)
(74) Mandataire: Sauvage, Renée

(56) Documents cités:
- FR-A- 1 267 850
- FR-A- 1 529 361
- FR-A- 2 126 922
- FR-A- 2 681 101
- FR-A- 2 687 733

## Description

La présente invention concerne un inverseur de poussée de type à portes basculantes destiné à équiper un moteur à réaction. Dans ce type d'inverseur connu, les portes sont conçues pour évoluer entre deux positions, à savoir une position dite "de croisière" dans laquelle elles constituent des éléments de capotage d'un canal d'éjection des gaz permettant une circulation du flux de gaz d'amont en aval, et une position dite "d'inversion de poussée" dans laquelle les portes, après basculement, obturent au moins partiellement le canal d'éjection et dévient un flux de gaz radialement vers l'extérieur et vers l'amont.

Plus particulièrement, l'invention propose un perfectionnement aux portes d'inverseur connues dans lesquelles, afin d'aider à l'inversion et au guidage du flux dévié, on prévoit au moins une structure déflectrice s'étendant à peu près perpendiculairement à la porte à partir de la face interne de celle-ci, structure déflectrice située à l'extrémité amont de la porte et/ou sur les bords latéraux de celle-ci. On a déjà proposé, notamment dans la demande de brevet EP-A-558 381, faisant partie de l'Etat de la technique selon l'Article 54(3) CBE, au nom de la demanderesse, une configuration de structure déflectrice destinée à assurer un contrôle de la direction du jet dévié, ceci pour éviter le phénomène de ré-ingestion par le moteur et/ou les interférences du jet dévié avec les structures, notamment de la voilure de l'avion.

La solution décrite dans cette demande de brevet antérieure consiste à ménager dans l'épaisseur d'une plaque déflectrice, une série d'ouvertures de profil spécial qui permet d'imposer aux veines de gaz dévié une orientation privilégiée.

Si une telle disposition s'est révélée efficace en général, elle présente cependant des limites pour certains cas particuliers, notamment pour les moteurs disposés sous voilure, qui requièrent une orientation de la nappe déviée selon des angles beaucoup plus fermés.

La configuration nouvelle de la structure déflectrice objet de la présente invention a pour but de répondre à ce problème. Dans cette optique, l'inverseur selon l'invention se caractérise par le fait que ladite structure déflectrice est constituée par :
- une semelle fixée sur le bord de la porte,
- un raidisseur transversal écarté de ladite semelle et délimitant, avec elle, un espace vide, et
- une série d'aubes déflectrices logées dans ledit espace vide, entre la semelle et le raidisseur, et fixées à ladite semelle et audit raidisseur.

On connaît, certes, d'après FR-A-2 681 101, un inverseur à portes dont les portes comportent une structure déflectrice 13 (ou becquet) perpendiculaire à la porte (figures 4 et 5), mais cette structure est pleine et les éléments en forme d'aube 23 sont fixés entre la structure 13 et le fond de la porte. Le flux d'air ne peut pas, selon ce document, traverser la structure 13 entre les aubes qui ne sont pas logées dans un espace vide ménagé entre un raidisseur écarté et une semelle. Dans la forme de réalisation de la figure 7 de FR-A-2 681 101, les éléments 123 en forme d'aubes font saillie à partir du fond de la porte. Dans ce cas non plus, il n'existe pas de passage vide entre les aubes permettant au flux de traverser la porte.

Avantageusement, selon l'invention, le raidisseur transversal et la semelle sont solidaires de façon à constituer un cadre indéformable, la semelle présentant à ses deux extrémités des membrures latérales délimitant avec la semelle un espace en U où sont logées les aubes, le raidisseur transversal étant fixé aux extrémités libres des membrures latérales.

Afin d'obtenir un effet d'orientation particulièrement efficace de la nappe déviée, les aubes déflectrices ont un profil aérodynamique en forme d'aile dont le bord d'attaque, de préférence arrondi, est orienté vers l'intérieur de la porte et le bord de fuite est situé dans le même plan que la semelle de la structure déflectrice.

Les aubes sont sensiblement parallèles entre elles et sont inclinées d'un angle compris entre 0° et 70° par rapport à la normale au plan de la semelle (angle d'attaque). De même, le centre géométrique de l'extrémité de chaque aube liée à la semelle est décalé par rapport au centre géométrique de l'extrémité de l'aube liée au raidisseur d'un angle compris entre 0° et 30°.

Par ailleurs, le raidisseur transversal aura avantageusement une section en forme d'aile avec bord d'attaque arrondi orienté vers l'intérieur de la porte et bord de fuite situé dans le même plan que les bords de fuite des aubes.

D'autres caractéristiques de l'invention apparaîtront au cours de la description d'une forme de réalisation de la présente invention en référence aux dessins annexés dans lesquels :

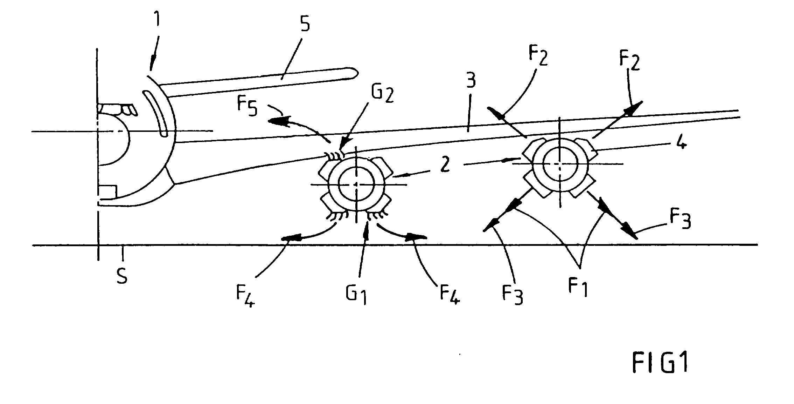

- la figure 1 représente schématiquement un avion équipé de moteurs situés sous la voilure et auxquels la présente invention est particulièrement adaptée ;

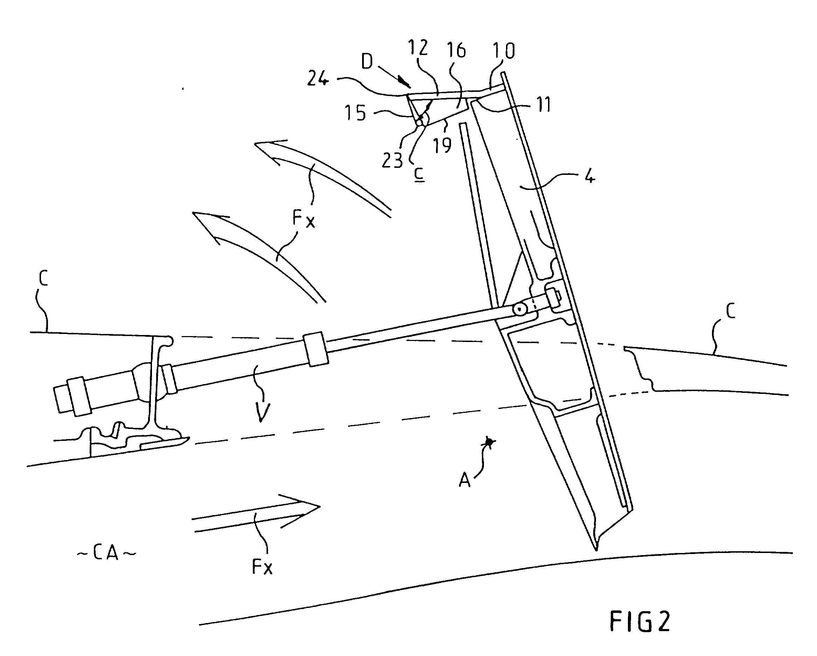

- la figure 2 représente, vue de côté, une porte d'inverseur équipée de la structure déflectrice selon l'invention ;

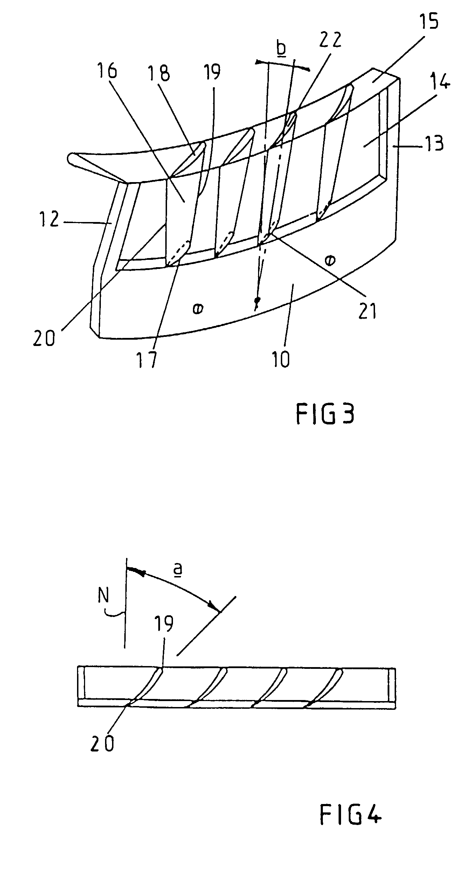

- la figure 3 est une vue en perspective de la structure déflectrice ;
- la figure 4 est une vue de dessus ;

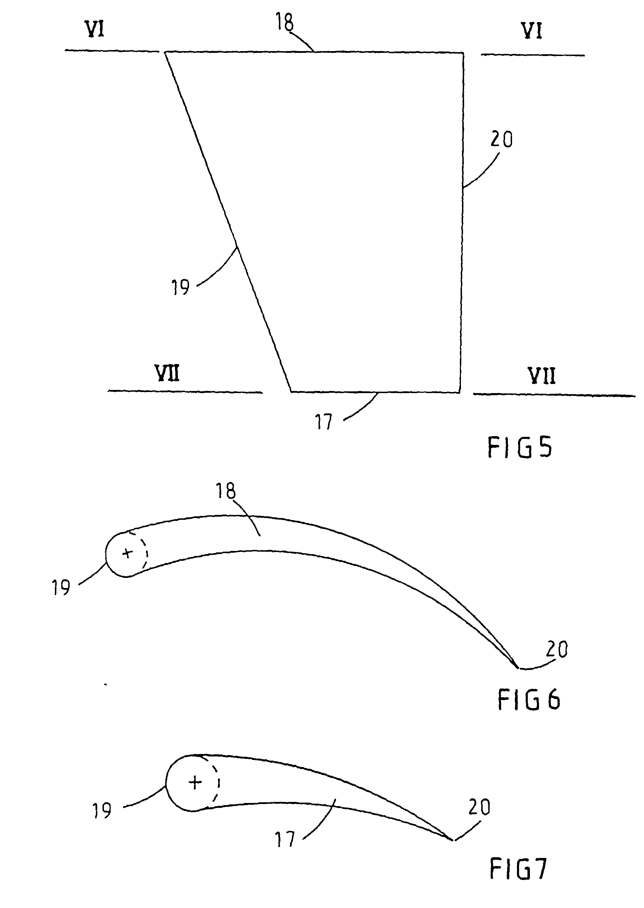

- la figure 5 est une vue de côté d'une aube ;
- les figures 6 et 7 sont des vues en coupe de chaque extrémité de l'aube de la figure 5, respectivement selon les lignes VI-VI et VII-VII ; et

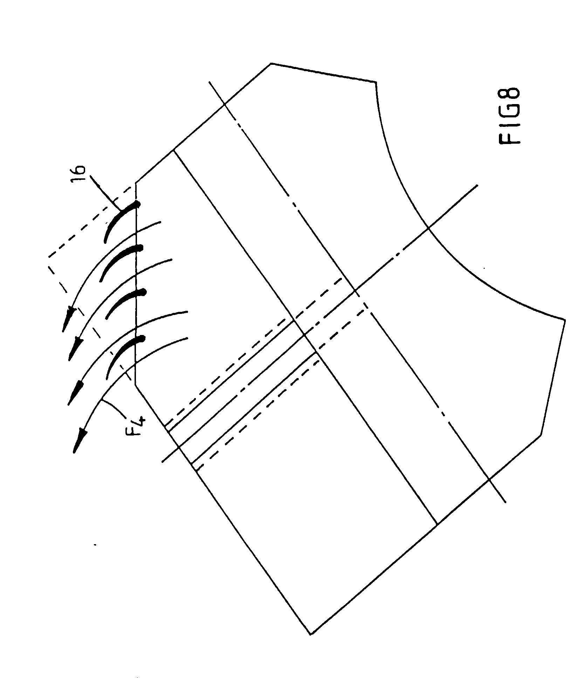

- la figure 8 représente une porte d'inverseur déployée équipée du système de l'invention et montrant le guidage des nappes déviées par rapport au sol.

La figure 1 représente schématiquement, vue de face, la partie droite d'un avion à réaction 1 du type à moteurs 2 suspendus sous les ailes 3 de l'avion. Lors de l'atterrissage, l'avion roule sur le sol S et les inverseurs à portes 4 des moteurs sont en position d'inversion de poussée déployée. Comme on le voit sur le moteur de droite de la figure 1, que l'on considère comme n'étant pas équipé du système de guidage de nappe faisant l'objet de l'invention, la direction du flux inversé est matérialisée par les flèches F1 et F2. Les flèches F1 montrent que le flux vient frapper le sol, ce qui risque d'entraîner des projections de pierres et surtout des renvois d'air chaud selon la flèche F3 qui peuvent être ré-ingérés par les moteurs, avec un risque de détérioration de ces derniers. De même, le flux inversé selon la flèche F2 risque de heurter l'empennage horizontal 5 de l'avion en créant des effets indésirables, notamment sur la maniabilité de l'avion.

Le système de guidage des veines de gaz inversé selon l'invention dont on suppose que le moteur de gauche est équipé permet d'éliminer ces inconvénients. Ainsi, les portes inférieures de l'inverseur équipé du système de guidage G1 permet d'orienter le flux inversé sensiblement selon les flèches F4 selon une trajectoire qui tangente le sol et écarte le flux latéralement. Les portes supérieures pourront être équipées d'un système de guidage similaire G2 qui déviera le flux selon une flèche F5 à l'écart de l'empennage horizontal 5.

On décrira à présent plus en détail le système de guidage de nappe en référence aux figures 2 à 7. Il est évident que ce système peut équiper tout type de portes d'inverseur à portes et s'applique à des moteurs fixés non seulement, comme à la figure 1, sous voilure mais également à des moteurs disposés en tout autre endroit de l'avion.

Comme cela est bien connu, l'inverseur de poussée est constitué par plusieurs portes 4 articulées de façon à basculer autour d'un axe A sous l'action d'un vérin de commande V entre une position dite "de croisière" dans laquelle la porte est alignée avec les parties de capotage C et libère totalement le canal annulaire CA et une position dite "d'inversion" représentée en trait plein à la figure 2 et dans laquelle la partie aval de la porte obture le canal CA tandis que sa partie amont fait saillie à l'extérieur du capotage de façon à dévier le flux Fx radialement vers l'extérieur et vers l'amont. Afin d'aider à l'inversion du flux, la porte 4 présente sur son bord amont 11 au moins une structure déflectrice frontale, ou becquet, désignée de façon générale en D et s'étendant à partir de la face interne de la porte.

L'invention concerne la construction particulière de cette structure déflectrice qui permet un guidage latéral du flux dévié.

Cette structure déflectrice, dans la forme de réalisation représentée, donnée à titre d'exemple non limitatif, comporte une semelle 10 fixée (par soudage, rivetage ou boulonnage) contre le bord 11 de la porte. A ses extrémités, la semelle est prolongée vers le haut par deux membrures latérales 12 et 13 (figure 3) qui forment avec la semelle 10 un cadre en U délimitant un espace vide 14. L'extrémité supérieure des membrures 12 et 13 est coiffée par un raidisseur transversal 15.

Dans l'espace 14 sont logées des aubes 16 profilées en forme d'aile dont le pied 17 est fixé à la semelle 10 et la tête 18 est fixée sous le raidisseur 15, la tête 18 étant plus longue que le pied 17. Comme on le voit à la figure 4 qui est une vue de dessus de la figure 3, les aubes 16 sont sensiblement parallèles entre elles et sont inclinées d'un angle a par rapport à la normale N à la semelle qui peut être compris entre 0° et 70° selon les besoins d'orientation latérale du flux dévié.

Le bord d'attaque 19 arrondi des aubes 16 est orienté vers l'intérieur de la porte, tandis que leur bord de fuite 20 est tourné vers l'extérieur, bord de fuite qui est situé dans le même plan que la semelle 10 et les membrures 12,13 de la structure déflectrice.

Par ailleurs, comme on le voit à la figure 3, le centre géométrique 21 du pied 17 de chaque aube est décalé par rapport au centre géométrique 22 de la tête 18 d'aube d'un angle b qui peut être compris entre 0° et 30°.

Comme on le voit particulièrement aux figures 2, 5, 6 et 7 les aubes 16 ont, vues de face, une forme sensiblement trapézoïdale, leur bord de fuite 20 étant à peu près perpendiculaire au pied 17 et à la tête 18 de l'aube, tandis que leur bord d'attaque 19 est incliné. Le pied d'aube 17 est plus court que la tête d'aube 18.

Le raidisseur 15, quant à lui, peut avantageusement présenter également une section aérodynamique en forme d'aile avec bord d'attaque arrondi 23 (figure 2) orienté vers l'intérieur de la porte et bord de fuite linéaire 24 situé dans le même plan que les bords de fuite des aubes 16.

Enfin, l'angle c entre le raidisseur 15 et le plan de l'espace en U 14 délimité par le cadre 10,11,13 est compris entre 30° et 90°.

## Revendications

1. Inverseur de poussée pour moteur à réaction du type à portes basculantes (4) susceptibles d'évoluer entre deux positions, à savoir une position dite "de croisière" dans laquelle les portes (4) constituent des éléments de capotage (C) d'un canal d'éjection (CA) des gaz permettant une circulation du flux de gaz d'amont en aval, et une position dite "d'inversion de poussée" dans laquelle les portes (4), après basculement, obturent au moins partiellement le canal d'éjection (CA) et dévient un flux de gaz radialement vers l'extérieur et vers l'amont, chacune desdites portes (4) comportant sur son bord amont (11) une structure déflectrice (D) s'étendant à peu près perpendiculairement à la porte (4) et destinée à guider le flux dévié, ledit inverseur étant caractérisé en ce que ladite structure déflectrice (D) est constituée par :
- une semelle (10) fixée sur le bord (11) de la porte (4),
- un raidisseur transversal (15) écarté de ladite semelle (10) et délimitant, avec elle, un espace vide (14), et
- une série d'aubes déflectrices (16) logées dans ledit espace vide (14), entre la semelle (10) et le raidisseur (15), et fixées à ladite semelle et audit raidisseur.

2. Inverseur selon la revendication 1, caractérisé en ce que le raidisseur transversal (15) et la semelle (10) sont solidaires de façon à constituer un cadre indéformable.

3. Inverseur selon la revendication 1 ou 2, caractérisé en ce que la semelle (10) présente à ses deux extrémités des membrures latérales (12,13) délimitant avec la semelle un espace (14) en U où sont logées les aubes (16).

4. Inverseur selon la revendication 3 caractérisé en ce que le raidisseur transversal (15) est fixé aux extrémités libres des membrures latérales (12,13).

5. Inverseur selon l'une quelconque des revendications 1 à 4, caractérisé en ce que les aubes déflectrices (16) ont un profil aérodynamique en forme d'aile dont le bord d'attaque (19) est orienté vers l'intérieur de la porte (4) et le bord de fuite (20) est situé dans le même plan que la semelle (10) de la structure déflectrice (D).

6. Inverseur de poussée selon l'une quelconque des revendications 1 à 5, caractérisé en ce que les aubes déflectrices (16) sont sensiblement parallèles entre elles et sont inclinées d'un angle a compris entre 0° et 70° par rapport à la normale (N) au plan de la semelle (angle d'attaque).

7. Inverseur de poussée selon l'une quelconque des revendications 1 à 6, caractérisé en ce que le centre géométrique (21) de l'extrémité de chaque aube (16) liée à la semelle (10) est décalé par rapport au centre géométrique (22) de l'extrémité de l'aube liée au raidisseur transversal (15), d'un angle b compris entre 0° et 30°.

8. Inverseur de poussée selon l'une quelconque des revendications 1 à 7, caractérisé en ce que le raidisseur transversal (15) a une section en forme d'aile avec bord d'attaque (23) arrondi orienté vers l'intérieur de la porte et bord de fuite (24) situé dans le même plan que les bords de fuite des aubes.

9. Inverseur de poussée selon l'une quelconque des revendications 1 à 8, caractérisé en ce que l'extrémité (18) de l'aube liée au raidisseur transversal (15) est plus longue que l'extrémité (17) liée à la semelle.

10. Inverseur de poussée selon l'une quelconque des revendications 3 à 9, caractérisé en ce que le raidisseur transversal fait un angle c compris entre 30° et 90° avec le plan de l'espace en U (14) délimité par la semelle et ses deux membrures latérales.

## Patentansprüche

1. Schubumkehrvorrichtung für Strahltriebwerk mit schwenkbaren Klappen (4), die sich zwischen zwei Stellungen bewegen können, und zwar zwischen einer sogenannten Fahrtstellung, in der die Klappen (4) Verkleidungselemente (C) eines Gasausstoßkanals (CA) bilden, die eine Strömung des Gasstroms von vorne nach hinten gestatten, und einer sogenannten Schubumkehrstellung, in der die Klappen (4) nach Verschwenken den Ausstoßkanal (CA) mindestens teilweise verschließen und einen Gasstrom radial nach außen und nach vorne ablenken, wobei jede der Klappen (4) an ihrem vorderen Rand (11) eine Ablenkstruktur (D) aufweist, die sich ungefähr senkrecht zur Klappe (4) erstreckt und dazu bestimmt ist, den abgelenkten Strom zu führen, wobei diese Umkehrvorrichtung dadurch gekennzeichnet ist, daß die Ablenkstruktur (D) aus den folgenden Bauteilen besteht:
- eine an dem Rand (11) der Klappe (4) befestigte Fußplatte (10),
- eine von dieser Fußplatte (10) entfernte Querversteifung (15), die mit dieser einen leeren Raum (14) abgrenzt, und
- eine Reihe von Ablenkschaufeln (16), die in diesem leeren Raum (14) zwischen der Fußplatte (10) und der Versteifung (15) untergebracht sind und an der Fußplatte und an der Versteifung befestigt sind.

2. Umkehrvorrichtung nach Anspruch 1, dadurch gekennzeichnet, daß die Querversteifung (15) und die Fußplatte (10) miteinander fest verbunden sind, so daß sie einen unverformbaren Rahmen bilden.

3. Umkehrvorrichtung nach Anspruch 1 oder 2, dadurch gekennzeichnet, daß die Fußplatte (10) an ihren beiden Enden seitliche Spanten (12, 13) aufweist, die mit der Fußplatte einen U-förmigen Raum (14) abgrenzen, in dem die Schaufeln (16) untergebracht sind.

4. Umkehrvorrichtung nach Anspruch 3, dadurch gekennzeichnet, daß die Querversteifung (15) an den freien Enden der seitlichen Spanten (12, 13) befestigt ist.

5. Umkehrvorrichtung nach einem der Ansprüche 1 bis 4, dadurch gekennzeichnet, daß die Ablenkschaufeln (16) ein aerodynamisches Profil in Form eines Flügels haben, dessen Eintrittskante (19) dem Inneren der Klappe (4) zugewandt ist und dessen Austrittskante (20) in derselben Ebene wie die Fußplatte (10) der Ablenkstruktur (D) liegt.

6. Schubumkehrvorrichtung nach einem der Ansprüche 1 bis 5, dadurch gekennzeichnet, daß die Ablenkschaufeln (16) im wesentlichen zueinander parallel sind und gegen die Normale (N) auf die Ebene der Fußplatte um einen Winkel a von 0° bis 70° geneigt sind (Anstellwinkel).

7. Schubumkehrvorrichtung nach einem der Ansprüche 1 bis 6, dadurch gekennzeichnet, daß der geometrische Mittelpunkt (21) des mit der Fußplatte (10) verbundenen Endes jeder Schaufel (16) gegen den geometrischen Mittelpunkt (22) des mit der Querversteifung (15) verbundenen Endes der Schaufel um einen Winkel b von 0° bis 30° versetzt ist.

8. Schubumkehrvorrichtung nach einem der Ansprüche 1 bis 7, dadurch gekennzeichnet, daß die Querversteifung (15) einen flügelförmigen Querschnitt mit einer abgerundeten Eintrittskante (23), die dem Inneren der Klappe zugewandt ist, und mit einer Austrittskante (24) hat, die in derselben Ebene wie die Austrittskanten der Schaufeln gelegen ist.

9. Schubumkehrvorrichtung nach einem der Ansprüche 1 bis 8, dadurch gekennzeichnet, daß das mit der Querversteifung (15) verbundene Ende (18) der Schaufel länger als das mit der Fußplatte verbundene Ende (17) ist.

10. Schubumkehrvorrichtung nach einem der Ansprüche 3 bis 9, dadurch gekennzeichnet, daß die Querversteifung mit der Ebene des von der Fußplatte und ihren beiden seitlichen Spanten abgegrenzten U-förmigen Raums (14) einen Winkel c von 30° bis 90° bildet.

## Claims

1. A thrust reverser for a jet engine of the type with pivoting doors (4) capable of moving between two positions, namely a so-called "cruising" position in which the doors (4) constitute fairing elements (C) for a duct for ejecting (CA) the gases allowing the flow of gas to circulate from upstream to downstream, and a so-called "thrust reversal" position in which the doors (4), after pivoting, at least partially close off the ejection duct (CA) and divert a flow of gas radially outward and upstream, each of said doors (4) including, on its upstream edge (11), a deflecting structure (D) extending more or less perpendicularly to the door (4) and intended to guide the diverted flow, said reverser being characterized in that said deflecting structure (D) consists of :
- a sole plate (10) fixed to the edge (11) of the door (4),
- a transverse stiffener (15) separated from said sole plate (10) and delimiting, with it, an empty space (14), and
- a series of deflecting vanes (16), housed in said empty space (14), between the sole plate (10) and the stiffener (15), and fixed to said sole plate and to said stiffener.

2. The reverser as claimed in claim 1, wherein the transverse stiffener (15) and the sole plate (10) are secured so as to constitute an indeformable frame.

3. The reverser as claimed in claim 1 or 2, wherein the sole plate (10) has, at its two ends, lateral members (12,13) delimiting, with the sole plate, a U-shaped space (14) in which the vanes (16) are housed.

4. The reverser as claimed in claim 3, wherein the transverse stiffener (15) is fixed to the free ends of the lateral members (12,13).

5. The reverser as claimed in any one of claims 1 to 4, wherein the deflecting vanes (16) have an aerodynamic profile in the form of a wing, the leading edge (19) of which is oriented toward the inside of the door (4), and the trailing edge (20) of which is located in the same plane as the sole plate (10) of the deflecting structure (D).

6. The thrust reverser as claimed in any one of claims 1 to 5, wherein the deflecting vanes (16) are substantially parallel to each other and are inclined by an angle a lying between 0° and 70° with respect to the normal (N) to the plane of the sole plate (angle of attack).

7. The thrust reverser as claimed in any one of claims 1 to 6, wherein the geometric center (21) of the end of each vane (16) connected to the sole plate (10) is offset with respect to the geometric center (22) of the end of the vane connected to the transverse stiffener (15) by an angle b lying between 0° and 30°.

8. The thrust reverser as claimed in any one of claims 1 to 7, wherein the transverse stiffener (15) has a cross section in the form of a wing with rounded leading edge (23) oriented toward the inside of the door and trailing edge (24) located in the same plane as the trailing edges of the vanes.

9. The thrust reverser as claimed in any one of claims 1 to 8, wherein the end (18) of the vane connected to the transverse stiffener (15) is longer than the end (17) connected to the sole plate.

10. The thrust reverser as claimed in any one of claims 3 to 9, wherein the transverse stiffener forms an angle c lying between 30° and 90° with the plane of the U-shaped space (14) delimited by the sole plate and its two lateral members.
